# EUROPÄISCHE PATENTSCHRIFT

(11) **EP 0 692 668 B1**
(45) Veröffentlichungstag und Bekanntmachung des Hinweises auf die Patenterteilung: **26.02.1997**
(21) Anmeldenummer: 94110816.9
(22) Anmeldetag: 12.07.1994
(51) Int. Cl.: F16N 7/32, F16N 13/06

(54) **Mischschmiersystem für eine Öl- bzw. Fliessfett-Luftschmierung**
Mist lubrication system for an oil or grease air lubrication
Système de graissage par pulvérisation pour un graissage à air au moyen d'huile ou de graisse

(43) Veröffentlichungstag der Anmeldung: 17.01.1996
(73) Patentinhaber: DE LIMON FLUHME GMBH, D-40227 Düsseldorf (DE)
(72) Erfinder: Morgenstern, Gerhard, D-40822 Mettmann (DE); Saretzky, Horst, D-58256 Ennepetal (DE); Herwig, Helmut, D-41516 Grevenbroich (DE)
(74) Vertreter: Stenger, Watzke & Ring Patentanwälte

(56) Entgegenhaltungen:
- DE-A- 2 320 635
- DE-A- 4 039 169
- GB-A- 673 521
- GB-A- 868 472
- GB-A- 1 436 282

## Beschreibung

Die Erfindung betrifft ein Mischschmiersystem für eine Öl- bzw. Fließfett-Luftschmierung, mit einer Druckluftzufuhr und einer Schmierstoff-Dosierpumpe, in deren Arbeits- und Dosierkammer von einer Seite her ein federbelasteter, mit einem Elektromagnetantrieb verbundener Förderkolben und von der anderen Seite her in koaxialer Anordnung ein federbelasteter Steuerkolben hineinragen, wobei die Arbeits- und Dosierkammer einerseits einen Schmierstoffzufuhranschluß und andererseits einen Schmierstoffauslaß zu einer Mischkammer und einer damit verbundenen Sprühdüse aufweist.

Mischschmiersysteme mit einer Schmierstoffpumpe, einer Druckluftzufuhr und einem separaten Mischelement sind bekannt. Sie stellen eine Kombination eines Intervallschmiersystems (Einleiter, Progressiv, Zweileiter, Mehrleiter) mit einem Mischelement dar, in welchem innerhalb des Schmiersystems eine geförderte Schmierstoffmenge in eine Leitung mit kontinuierlich strömender Druckluft eingespeist wird. Dabei ist nachteilig, daß je Schmierstelle ein Mischelement zum Zuführen und Einstellen der Druckluft und ein zweites Anschlußelement zum Zuführen und Einstellen des Schmierstoffs erforderlich ist. Eine Aufteilung in Gemisch-Teilströme ist darüber hinaus bei diesem Mischschmiersystem nicht möglich. Dies bedeutet, daß entsprechend der Zahl der Schmierstellen eine entsprechend hohe Anzahl von Schmierstoffaufgliederungen vorgenommen werden muß und dann in einer entsprechend hohen Zahl von Mischsegmenten das Schmierstoff-Luftgemisch erzeugt werden muß, welches dann der Schmierstelle zuführbar ist. Dies Mischschmiersystem wird hierdurch apparativ aufwendig, teuer und weist für kleine Maschinen zu große Baugrößen auf.

Bei einem demgegenüber verbesserten Mischschmiersystem gemäß der deutschen Patentanmeldung P 43 30 572.5 ist zur Vermeidung der genannten Nachteile vorgeschlagen, eine Magnetkolbenpumpe für den Schmierstoff zu kombinieren mit einem separaten Mischelement, von dem aus auf Wunsch auch Teilströme des Schmierstoff-Luftgemischs zu den Schmierstellen förderbar sind. Der Bauaufwand ist hiermit bereits wesentlich verringert. Dennoch wird in der Praxis als nachteilig empfunden, daß ein separater Mischelementkörper erforderlich ist und daß bei einer intermittierenden Druckluftzuführung zum Mischelement ein Zwei/Zwei-Wege-Magnetventil oder sonstiges Steuerventil erforderlich ist, um Öffnungsrhythmus und Öffnungszeit zu steuern. Schließlich müssen nachteiligerweise zwei Zuleitungen, nämlich eine für Schmierstoff und eine für Druckluft bis zum Mischelement, ggf. annähernd bis zur, zu schmierenden, Reibstelle geführt werden. Dabei können sich Schmierstoffdruckverluste aufgrund des Rohrreibungswiderstandes, insbesondere bei tiefen Temperaturen, in der Verbindungsleitung zwischen Magnetkolbenpumpe und Mischelement einstellen.

Der Erfindung liegt die Aufgabe zugrunde, unter Meidung der beschriebenen Nachteile, dies Mischschmiersystem konstruktiv wesentlich zu vereinfachen und die Zahl der zu verwendenden Bauelemente zu verringern, wobei gleichzeitig das System anwendungssicherer und störungsfreier gestaltet werden soll.

Die Aufgabe ist erfindungsgemäß dadurch gelöst, daß die Mischkammer im Pumpengehäuse integriert ist und die Magnetkolbenpumpe mit einem direkten, zur Mischkammer führenden, Druckluftanschluß versehen ist. Hierdurch wird ein außerordentlich kleinbauendes Pumpenaggregat unter Meidung der bisherigen separaten Mischelemente bereitgestellt, wobei das Schmierstoff-Luft-Gemisch mittels einer Mischschmierleitung außerordentlich platzsparend und variabel verlegbar auch an schwierig zu erreichende Reibstellen transportiert werden kann.

Insbesondere für den intermittierenden Betrieb einer Schmierstoff-Sprüh-Versorgung wird gemäß einer zweckmäßigen Ausgestaltung der Erfindung vorgeschlagen, daß mittels eines Rückschlagventils im Druckluftanschluß der Magnetkolbenpumpe die von der Druckluftzufuhr her anstehende Druckluft gesteuert der Mischkammer zuführbar ist. Die Öffnungszeit für das druckluftseitige Rückschlagventil ist vorzugsweise durch die Magnet-Betätigungszeit der Magnetkolbenpumpe gesteuert.

Eine besonders kompakte Bauart einer Magnetkolbenpumpe mit direktem Druckluftanschluß und Mischkammer wird gemäß einer vorteilhaften Weiterentwicklung der Erfindung dadurch erreicht, daß im Pumpengehäuse eine zentrische Zylinderbohrung ausgebildet ist, die die Arbeits- und Dosierkammer bildet, die von der einen Seite her durch den in der Zylinderbohrung angeordneten Förderkolben und von der anderen Seite her durch den ebenfalls in der Zylinderbohrung angeordneten Steuerkolben begrenzt wird, welcher den Drucklufteinlaß zur Mischkammer öffnet oder schließt. Dabei ist vorzugsweise druckluftanschlußseitig am Steuerkolben zentrisch ein Stößelfortsatz ausgebildet, der in Abhängigkeit von der Stellung des Steuerkolbens das Rückschlagventil für die Druckluftbeaufschlagung betätigt. Für den intermittierenden Betrieb einer Schmierstoff-Spüh-Versorgung wird durch den konstanten Magnetkolbenhub einmal eine dosierte Schmierstoffmenge in die Mischkammer abgegeben und über die Berührungsübertragung in der Hubrichtung über den Steuerkolben mit dem Stößelfortsatz das Rückschlagventil für einen kurzzeitigen Druckluftdurchfluß geöffnet. In der Mischkammer entsteht ein Schmierstoff-Luftgemisch, welches dann über die Mischschmierleitung zur Sprühdüse geführt wird.

Bei dieser Ausführungsform mit zentrischer Zylinderbohrung ist es vorteilhaft, den Schmierstoffanschluß an das Pumpengehäuse und die im Pumpengehäuse ausgebildete Mischkammer versetzt zueinander gegenüberliegend anzuordnen und an den Zylinderraum anzuschließen, um eine kurze, kompakte Pumpenausführung zu erhalten. In dem gleichen Sinne ist es vorteilhaft, das Rückschlagventil in einem Schraubeinsatz koaxial in Fortsetzung des Zylinderraums an das Pumpengehäuse am Druckluftanschluß anzuschließen, wobei dieser entweder axial oder rechtwinklig zur zentrischen Zylinderbohrung vorgesehen sein kann.

Zur Vorsorge, daß beim Sprühvorgang aus den Luft-Verbindungsräumen in der Magnetkolbenpumpe über die metallisch eingepaßten Kolben keine Luft in die Schmierstoffräume dringen kann, ist vorgesehen, daß die Schmierstoffzuführung unter Druck erfolgt, wobei der Schmierstoffzuführungsdruck größer als der Gemischabgangsdruck aus der Mischkammer ausgelegt ist.

Mit der beschriebenen Magnetkolbenpumpe mit integrierter Mischkammer und direktem Druckluftanschluß wird eine preiswerte, konstruktiv außerordentlich einfache Pumpe bereitgestellt, die mit geringem Montageaufwand sehr flexibel ein Schmierstoff-Luftgemisch zu Reibstellen kontinuierlich oder im intermittierenden Betrieb führen kann. Auch kleine Schmierstoffmengen zwischen 10mm³ und 50mm³ lassen sich in schneller Taktfolge homogen in der Druckluft verteilt einer Schmierstoffdüse zuführen, wobei auch die Abgabe an zwei Schmierstellen durch Teilung des Schmierstoff-Luftgemisches durch ein T-Stück ermöglicht ist, welches zwischen der Pumpe und der Düse angeordnet ist, bei dem im Gemischkanal ein drallerzeugender Einsatz, vorzugsweise das Drallstück eines Bohrers, angeordnet ist, an den zwei Auslaßbohrungen mit Sprühdüsen angeschlossen sind. Hiermit ist in einfacher Weise eine Vervielfältigung der Gemischabgaben für weitere Schmierstellen, ggf. mit weiteren Untergliederungen, möglich.

Eine bevorzugte Anwendung des erfindungsgemäßen Mischschmiersystems ist als Spurkornschmieranlage für Schienenfahrzeuge vorgesehen, bei der die Spurkränze in Intervallen mit Schmierstoff-Luftgemisch besprüht werden, um bei Kurvenfahrt oder auch bei Pendelbewegungen die Reibung beim Anlaufen an das Schienenprofil zu verringern und den Verschleiß herabzusetzen. Dabei kann in der einfachsten Ausführungsform die erfindungsgemäße Magnetkolbenpumpe mit integrierter Mischkammer und direktem Druckluftanschluß und nur einer Sprühdüse verwendet werden, was vor allem dort vorteilhaft ist, wo leichte, kleinbauende Geräte gebraucht werden und eine Abschmierung bei hoher Zuggeschwindigkeit mit hoher Taktfolge in Kleinstmengen erforderlich ist.

Bei üblichen Eisenbahnzügen wird vorzugsweise eine Spurkranzschmieranlage gemäß der Erfindung verwendet, die mit einer Magnetkolbenpumpe mit integrierter Mischkammer und direktem Druckanschluß, zwei T-Stücken und vier Dralldüsen ausgerüstet ist. Zur Anpassung an die bei Straßenbahnen vorgesehenen Rillenschienen mit Innenanlaufkante und dem dadurch gegebenen Erfordernis der "Überkreuzschmierung" ist in zweckmäßiger Ausgestaltung der Erfindung vorgeschlagen, zwei parallel arbeitende Magnetkolbenpumpen mit direktem Druckluftanschluß und integrierter Mischkammer zu verwenden, die jeweils mit einem T-Stück in Verbindung stehen, von denen zwei Ausgänge zum jeweils anderen Spurkranz geführt sind.

Weitere Einzelheiten, Merkmale und Vorteile der Erfindung ergeben sich aus der nachfolgenden Beschreibung der zugehörigen Zeichnung, in der das erfindungsgemäße Mischschmiersystem in verschiedenen Ausgestaltungen schematisch dargestellt ist. In der Zeichnung zeigt:
- Fig. 1: ein Mischschmiersystem als Spurkranzschmieranlage,
- Fig. 2: ein erweitertes Mischschmiersystem als Spurkranzschmieranlage für Eisenbahnfahrzeuge,
- Fig. 3: ein modifiziertes Schmiersystem als Spurkranzschmieranlage für Eisenbahnfahrzeuge und
- Fig. 4: ein Mischschmiersystem für Schienenfahrzeuge mit Rillenschienen, wie Straßenbahnen.

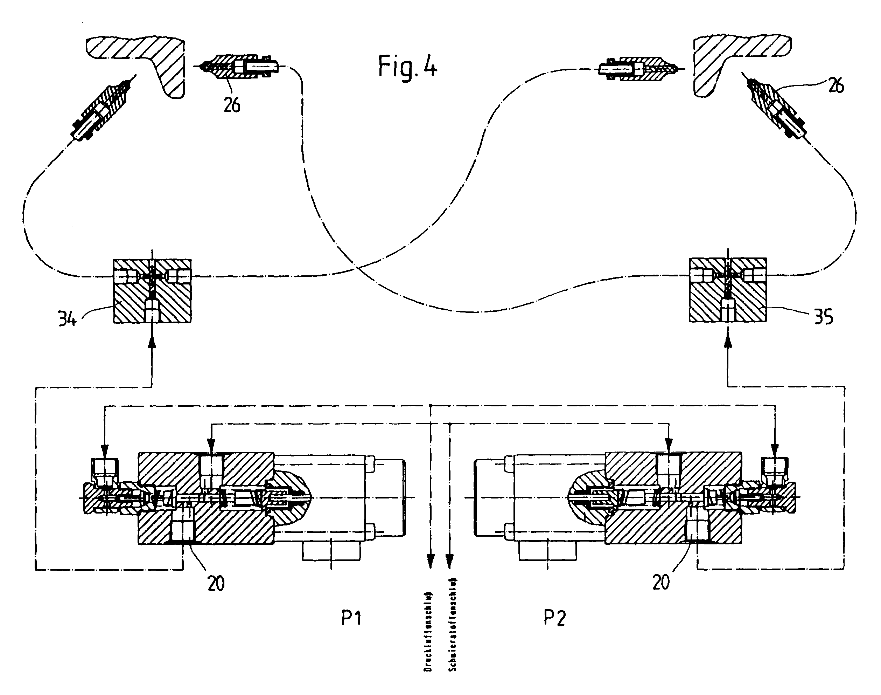

Die in der Zeichnung dargestellte Kolbendosierpumpe P, die in doppelter Ausführung mit den Bezugszeichen P1 und P2 in der Ausführung gemäß Fig. 4 der Zeichnung Verwendung findet, besteht in ihrem Kernstück aus einem Pumpengehäuse 5, welches zentrisch mit einer Zylinderbohrung 9 versehen ist, in der eine zylindrische Arbeits- und Dosierkammer 17 zwischen einem in ihr angeordneten Förderkolben 8 von der einen Seite her und Steuerkolben 4 von der anderen Seite her ausgebildet ist. Die zentrische Zylinderbohrung 9 steht über einen Schmierstoffeinlaß 16 mit einer Schmierstoffquelle zur Versorgung des Systems mit Öl oder Fließfett drucklos oder unter Druck in Verbindung.

Der in die Arbeits- und Dosierkammer 17 des Pumpengehäuses 5 von der in der Zeichnung linken Seite her hineinragende Steuerkolben 4 ist durch eine Feder 2 belastet und weist einen im Durchmesser erweiterten Steuerkolbenkopf 3 in einer stufenförmigen Erweiterung der Zylinderbohrung 9 als Gehäuseanschlag auf, welcher einen zentrischen Stößelfortsatz 6 zur Betätigung eines Rückschlagventils 15 aufweist, das im Druckluft-Rohranschluß 1 der Magnetkolbenpumpe P angeordnet ist. Durch die Bewegung des Steuerkolbens 4 wird über den Stößelfortsatz 6 das Rückschlagventil 15 für einen kurzzeitigen Druckluftdurchfluß zu einer Mischkammer 20 geöffnet. Die Mischkammer 20 ist in versetzter Anordnung zum Schmierstoff-Einlaß 16 diesem gegenüberliegend im Pumpengehäuse 5 in Form einer Querbohrung integriert und über eine Schmierstoffanschlußbohrung 33 mit der Zylinderbohrung 9 verbunden. Sie ist über die Bewegung des Steuerkolbens 4 sowohl mit Schmierstoff als auch mit Druckluft beaufschlagbar.

Der von der rechten Seite der Zeichnung in die Zylinderbohrung 9 hineinragende Förderkolben 8 ist durch eine Feder 7 in gleicher Wirkrichtung zur Feder 2 belastet, die einerseits am Pumpengehäuse 5 und andererseits an einem Halteflansch 21 des Förderkolbens 8 zur Anlage kommt. Im Rahmen seiner Bewegung öffnet und schließt der Förderkolben die Verbindung zwischen der Arbeits- und Dosierkammer 17 und dem Schmierstoff-Einlaß 16.

Der Förderkolben 8 ist über eine axiale Erstreckung 22 fest mit einem Verbindungsstift 23 verbunden, der ein Teil des Kern eines Magnetantriebs 12 der Dosierpumpe ist. Der Magnetantrieb ist mit Schrauben 13, 14 mit dem Pumpengehäuse 5 verschraubt, wobei zur separaten Führung des Stiftes 23 eine Stützeinrichtung 10 mit Dichtung 11 vorgesehen ist.

An die Mischkammer 20 des Pumpengehäuses 5 ist eine Mischschmierleitung 24 aus einem Rohr einer lichten Weite von 4 bis 5mm angeschlossen, welches an der Schmierstelle, die im vorliegenden Fall der Spurkranz 25 eines Schienenfahrzeugs ist, in einer Dralldüse 26 endet.

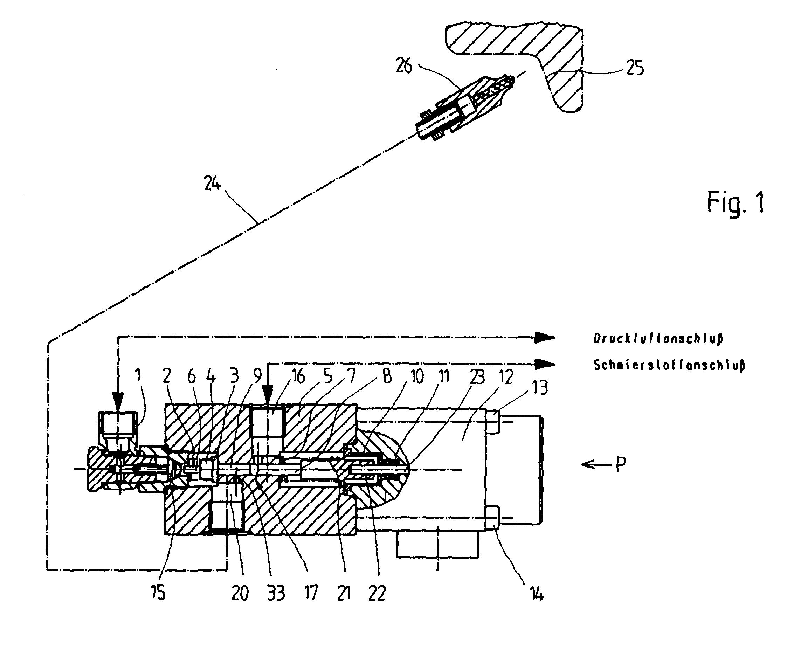

Für den intermittierenden Betrieb des in Fig. 1 der Zeichnung dargestellten Mischschmiersystems steht die Schmierstoffzuführung zum Schmierstoff-Einlaß 16 unter einem Schmierstoffzuführungsdruck, der größer ist als der Gemischabgangsdruck aus der Mischkammer 20. Bei der in der Zeichnung dargestellten Öffnungsstellung des Förderkolbens 8 findet eine Befüllung der Arbeits- und Dosierkammer mit Schmierstoff statt. Der Steuerkolben 4 befindet sich dabei in Schließstellung, so daß kein Schmierstoff durch die Schmierstoffanschlußbohrung 33 in die Mischkammer 20 eintreten kann. Darüber hinaus ist keine mechanische Verbindung zwischen dem Stößelfortsatz 6 des Steuerkolbens und dem Rückschlagventil 15 gegeben, das sich somit ebenfalls in Schließstellung befindet, so daß keine Druckluft in die Mischkammer 20 gelangt.

Nach Einschalten des Magnetantriebs wird zunächst der in der Arbeits- und Dosierkammer 17 befindliche Schmierstoff komprimiert durch eine Bewegung des Förderkolbens 8 nach links, nachdem die Verbindung zum Schmierstoffeinlaß 16 durch den Förderkolben 8 vollständig geschlossen wurde. In seinem weiteren Bewegungsweg wird nach der Kompression des Schmierstoffs die Antriebskraft auf den Steuerkolben 4 übertragen und dieser bewegt sich gegen die Wirkung seiner Feder 2 in der Zeichnung nach links zum Erreichen der Öffnungs- und Abgabestellung für den Schmierstoff in die Mischkammer 20 durch die Schmierstoffanschlußbohrung 33. Der Schmierstoff tritt nun dosiert in die Mischkammer 20 ein. Dabei bewegt sich der Steuerkolben 4 in seinem Endhub noch geringfügig weiter nach links und betätigt mit dem inzwischen am Rückschlagventil 15 zur Anlage gekommenen Stößelfortsatz 6 in Hubrichtung das Rückschlagventil 15 in die Öffnungsstellung. Das Rückschlagventil 15 ist damit für einen kurzzeitigen Druckluftdurchfluß aus dem Druckluftrohranschluß 1 geöffnet und beaufschlagt die Mischkammer 20, in der ein Schmierstoff-Luftgemisch entsteht, das über die Mischschmierleitung 24 zur Dralldüse 26 geführt wird. Die Öffnungszeit des druckluftseitigen Rückschlagventils 15 für die Luftdurchströmung wird durch die Magnet-Betätigungszeit der Magnetkolbenpumpe P gesteuert.

Nach dem Ausschalten des Magnetantriebs bewegt sich der Förderkolben 8 unter dem Einfluß seiner Feder 7 wieder in seine in der Zeichnung gezeigte rechte Position zur erneuten Befüllung der Arbeits- und Dosierkammer 17 mit Schmierstoff. Der Steuerkolben 4 folgt dieser Bewegung unter Einfluß seiner Feder 2, wodurch das Rückschlagventil 15 durch Federwirkung geschlossen wird und die Luftzufuhr unterbricht. Das System ist für einen erneuten Schmierzyklus bereit.

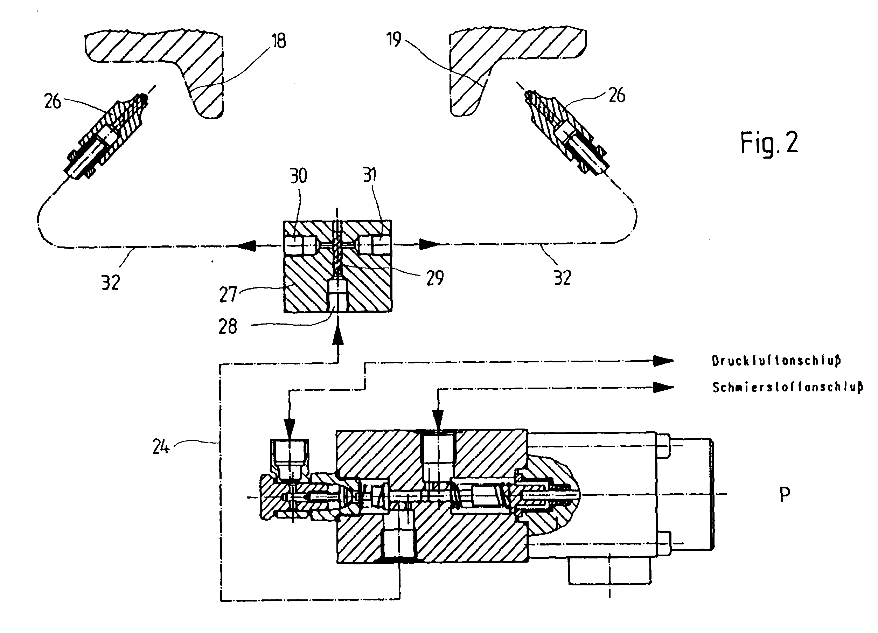

In Fig. 2 der Zeichnung ist eine modifizierte Ausführungsform einer Spurkranzschmieranlage dargestellt, mit der zwei Spurkränze 18, 19 gleichzeitig geschmiert werden können. Zu diesem Zweck ist an die Mischschmierleitung 24 ein T-Stück 27 angeschlossen, in dessen Zuführungsbohrung 28 ein Dralleinsatz 29 eingesetzt ist, der unter Aufrechterhaltung der Homogenität des Schmierstoff-Luftgemisches eine Aufteilung in zwei Teilströme bewirkt, die über Querbohrungen 30, 31 und durch Pfeile verdeutlichte Rohrleitungen 32 zu Düsen 26 geführt sind, welche an den Spurkränzen 18, 19 angeordnet sind.

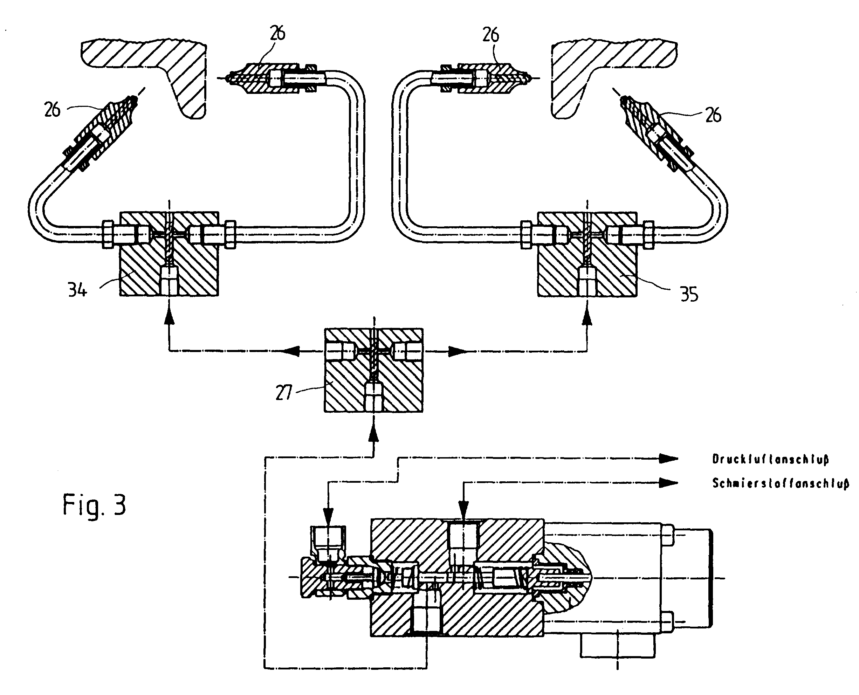

Die in Fig. 3 der Zeichnung dargestellte Ausführungsform eines Mischschmiersystems ermöglicht über das T-Stück 27 und zwei zusätzliche T-Stücke 34, 35 gleicher Ausbildung eine Aufteilung des Schmierstoff-Luftgemisches in vier Teilströme, die über die zugehörigen Düsen 26 vier Schmierstellen mit hoher Taktfolge und Kleinstmengen schmieren können, wobei ein außerordentlich homogenes Gemisch bleibend erzeugt wird und mit einem Sprühbild extremer Randschärfe abgegeben wird. Das dargestellte System eignet sich für die Innenschmierung und Außenschmierung insbesondere für Schienenfahrzeuge, bei denen eine Kurvenschmierung erwünscht ist.

Die in Fig. 4 der Zeichnung dargestellte modifizierte Ausführungsform verwendet im Gegensatz zu dem Vorbeschriebenen zwei Magnetkolbenpumpen P1 und P2, deren Mischkammern 20 über T-Stücke 34, 35 zu jeweils zwei Teilströmen an Schmierstoff-Luftgemisch aufgeteilt sind, von denen die in der Zeichnung inneren über Kreuz zu Düsen 26 an Spurkränzen von Schienenfahrzeugen für Rillenschienen (Straßenbahnen) geführt sind.

## Patentansprüche

1. Mischschmiersystem für eine Öl- bzw. Fließfett-Luftschmierung, mit einer Druckluftzufuhr (1) und einer Schmierstoff-Dosierpumpe (P, P1, P2), in deren Arbeits- und Dosierkammer (17) von einer Seite her ein federbelasteter, mit einem Elektromagnetantrieb (12) verbundener Förderkolben (8) und von der anderen Seite her in koaxialer Anordnung ein federbelasteter Steuerkolben (4) hineinragen, wobei die Arbeits- und Dosierkammer (17) einerseits einen Schmierstoffzufuhranschluß (16) und andererseits einen Schmierstoffauslaß (33) zu einer Mischkammer (20) und einer damit verbundenen Düse (26) aufweist,
**dadurch gekennzeichnet**,
daß die Mischkammer (20) im Pumpengehäuse (5) integriert ist und die Magnetkolbenpumpe (P, P1, P2) mit einem direkten, zur Mischkammer (20) führenden Druckluftanschluß (1) versehen ist.

2. Mischschmiersystem nach Anspruch 1, dadurch gekennzeichnet, daß mittels eines Rückschlagventils (15) im Druckluftanschluß (1) der Magnetkolbenpumpe (P, P1, P2) die von der Druckluftzufuhr her anstehende Druckluft gesteuert der Mischkammer (20) zuführbar ist.

3. Mischschmiersystem nach Anspruch 2, dadurch gekennzeichnet, daß die Öffnungszeit für das druckluftseitige Rückschlagventil (15) durch die Magnet-Betätigungszeit der Magnetkolbenpumpe (P, P1, P2) gesteuert ist.

4. Mischschmiersystem nach einem der Ansprüche 1 bis 3, dadurch gekennzeichnet, daß im Pumpengehäuse (5) der Magnetkolbenpumpe (P, P1, P2) eine zentrische Zylinderbohrung (9) ausgebildet ist, die die Arbeits- und Dosierkammer (17) bildet, die von der einen Seite her durch den in der Zylinderbohrung (9) angeordneten Förderkolben (8) und von der anderen Seite her durch den ebenfalls in der Zylinderbohrung (9) angeordneten Steuerkolben (4) begrenzt ist, welcher den Drucklufteinlaß zur Mischkammer (20) öffnet oder schließt.

5. Mischschmiersystem nach einem der Ansprüche 2 bis 4, dadurch gekennzeichnet, daß druckluftanschlußseitig am Steuerkolben (4) zentrisch ein Stößelfortsatz (6) ausgebildet ist, der in Abhängigkeit von der Stellung des Steuerkolbens (4) das Rückschlagventil (15) für die Druckluftbeaufschlagung betätigt.

6. Mischschmiersystem nach einem der Ansprüche 1 bis 5, dadurch gekennzeichnet, daß der Schmierstoffanschluß (16) im Pumpengehäuse (5) und die im Pumpengehäuse (5) ausgebildete Mischkammer (20) versetzt zueinander gegenüberliegend angeordnet und an die Zylinderbohrung (9) angeschlossen sind.

7. Mischschmiersystem nach einem der Ansprüche 2 bis 6, dadurch gekennzeichnet, daß das Rückschlagventil (15) in einem Schraubeinsatz koaxial in Fortsetzung der Zylinderbohrung (9) an das Pumpengehäuse (5) am Druckluftanschluß (1) angeordnet ist.

8. Mischschmiersystem nach einem der Ansprüche 1 bis 7, dadurch gekennzeichnet, daß die Schmierstoffzuführung unter Druck erfolgt, wobei der Schmierstoffzuführungsdruck größer als der Gemischabgangsdruck aus der Mischkammer (20) ausgelegt ist.

9. Mischschmiersystem nach einem der Ansprüche 1 bis 8, dadurch gekennzeichnet, daß an die Mischschmierleitung (24) ein T-Stück mit einem Dralleinsatz (29) zur Teilung des Schmierstoff-Luftgemisches angeordnet ist.

10. Verwendung eines Mischschmiersystems gemäß einem der Ansprüche 1 bis 9 als Spurkranzschmieranlage für Schienenfahrzeuge, bestehend aus einer Magnetkolbenpumpe (P, P1, P2) mit direktem Druckluftanschluß (1) und integrierter Mischkammer (20) sowie mindestens einer zu einer Düse (26) geführten Mischschmierleitung (24).

11. Verwendung gemäß Anspruch 10, gekennzeichnet durch zwei parallel arbeitende Magnetkolbenpumpen (P1, P2), deren Mischkammern (20) über je ein T-Stück (34, 35) mit Düsen (26) verbunden sind, von denen zwei Ausgänge über Kreuz zum jeweils anderen Spurkranz geführt sind.

## Claims

1. Mixing lubricating system for oil or liquid-grease air-lubrication, with a pressurised-air feed (1) and a lubricant dosing pump (P, P1, P2), in an operating and dosing chamber (17) of which a conveying piston (8), which is connected to an electromagnetic drive (12), projects from one side and, a spring-loaded control-piston (4) projects from a second side, in a co-axial arrangement, whereby a said operating and dosing chamber (17) has a lubricant feed connection (16) and a lubricant outlet (33) to a mixing chamber (20) and a jet nozzle (26) connected to it,
characterised in that
a mixing chamber (20) is integrated into a pump-housing (5) and a magnetic piston-pump (P, P1, P2) is provided with a pressurised-air connection (1) leading directly to a mixing chamber (20).

2. Mixing lubricating system in accordance with claim 1, characterised in that pressurised-air which is present from a pressurised-air connection backwards, can be fed, controlled, into a mixing chamber (20), by means of a check valve (15) in a pressurised-air connection (1) of a magnet piston-pump (P, P1, P2).

3. Mixing lubricating system in accordance with claim 2, characterised in that an open-period, for a check valve (15) on a pressurised-air side, can be controlled by a magnetic operating period of a magnetic piston-pump (P, P1, P2).

4. Mixing lubricating system in accordance with any one of claims 1 to 3, characterised in that a central cylindrical boring (9) is developed in a pump-housing (5) of a magnetic piston pump (P, P1, P2), a said cylindrical boring forming an operating and dosing chamber (17) which is bordered on one side by a conveying piston (8) disposed in a said cylindrical boring (9) and, on a second side, is bordered by a control piston (4) which is also disposed in a said cylindrical boring (9), a said control piston (4) opening and closing a pressurised-air intake to a mixing chamber (20).

5. Mixing lubricating system in accordance with any one of claims 2 to 4, characterised in that a tappet (6) is developed, centrally, on a control piston (4), a said tappet being operated dependent on a position of a said control piston (4) of a check valve (15) of application of pressurised-air.

6. Mixing lubricating system in accordance with any one of claims 1 to 5, characterised in that a lubricant connection (16) in a pumping housing (5) and a mixing chamber (20) developed in a said pumping housing (5) are disposed separated, opposite each other, and are connected onto a cylinder boring (9).

7. Mixing lubricating system in accordance with any one of claims 2 to 6, characterised in that a check valve (15) in a thread-insert is disposed coaxially in a projection of a cylinder boring (9) on a pumping housing (5) on a pressurised-air connection (1).

8. Mixing lubricating system in accordance with any one of claims 1 to 7, characterised in that feeding of lubricant occurs under pressure, whereby lubricant-feed pressure is designed to be greater than output pressure of a mixture from a mixing chamber (20).

9. Mixing lubricating system in accordance with claims 1 to 8, characterised in that a T-piece with swirl vanes (29) is disposed on a mixing lubricant tube (24) to divide a lubricant-air mixture.

10. Use of a mixing lubricating system in accordance with any one of claims 1 to 9 as a unit for lubricating wheel flanges of railed vehicles, comprising a magnetic piston pump (P, P1, P2) with a direct pressurised-air connection (1) and an integrated mixing chamber (20) and at least one mixing lubricating tube (24) directed to a jet-nozzle (26).

11. Application in accordance with claim 10, characterised by two magnet piston-pumps (P1, P2), operating parallel to each other, mixing chambers (20) of which are each connected to a T-piece (34, 35) with jet-nozzles (26) from which two outlets are directed to a given other wheel flange through intersection.

## Revendications

1. Système de graissage par pulvérisation pour un graissage à air au moyen d'huile ou de graisse, comprenant une arrivée d'air comprimé (1) et une pompe de dosage de lubrifiant (P, P1, P2), dans la chambre de travail et de dosage (17) de laquelle pénètrent, d'un côté, un piston d'alimentation (8) à sollicitation élastique relié à un moyen d'entraînement électromagnétique (12) et, de l'autre côté, en position coaxiale, un piston de commande (4) à sollicitation élastique, la chambre de travail et de dosage (17) comportant, d'une part, un raccord d'arrivée de lubrifiant (16) et, d'autre part, une sortie de lubrifiant (33) vers une chambre de mélange (20) et vers une buse de pulvérisation (26) qui y est reliée, caractérisé en ce que la chambre de mélange (20) est intégrée au carter (5) de la pompe et la pompe à piston magnétique (P, P1, P2) est munie d'un raccord direct d'air comprimé (1) menant à la chambre de mélange (20).

2. Système de graissage par pulvérisation selon la revendication 1, caractérisé en ce que l'air comprimé provenant de l'arrivée d'air comprimé peut être fourni de manière commandée à la chambre de mélange (20) au moyen d'une valve antiretour (15) implantée sur le raccord d'air comprimé (1) de la pompe à piston magnétique (P, P1, P2).

3. Système de graissage par pulvérisation selon la revendication 2, caractérisé en ce que le temps d'ouverture de la valve antiretour (15) située côté air comprimé est commandé en fonction du temps d'actionnement de l'aimant de la pompe à piston magnétique (P, P1, P2).

4. Système de graissage par pulvérisation selon l'une des revendications 1 à 3, caractérisé en ce que, dans le carter (5) de la pompe à piston magnétique (P, P1, P2), est ménagé un alésage cylindrique central (9) qui forme la chambre de travail et de dosage (17) qui est délimitée, d'un côté, par le piston d'alimentation (8) logé dans l'alésage cylindrique (9) et, de l'autre côté, par le piston de commande (4) qui est disposé lui aussi dans l'alésage cylindrique (9) et qui ouvre ou ferme l'admission d'air comprimé à la chambre de mélange (20).

5. Système de graissage par pulvérisation selon l'une des revendications 2 à 4, caractérisé en ce que, sur le côté raccord d'air comprimé, est prévu, au centre du piston de commande (4), un prolongement formant poussoir (6) qui, en fonction de la position du piston de commande (4), actionne la valve antiretour (15) d'alimentation en air comprimé.

6. Système de graissage par pulvérisation selon l'une des revendications 1 à 5, caractérisé en ce que le raccord de lubrifiant (16) implanté dans le carter (5) de la pompe et la chambre de mélange (20) ménagée dans le carter (5) de la pompe sont disposés à l'opposé l'un de l'autre et de manière décalée et sont reliés à l'alésage cylindrique (9).

7. Système de graissage par pulvérisation selon l'une des revendications 2 à 6, caractérisé en ce que la valve antiretour (15) est reliée au carter (5) de la pompe au niveau du raccord d'air comprimé (1) dans un embout fileté disposé coaxialement à l'alésage cylindrique (9) et dans le prolongement de celui-ci.

8. Système de graissage par pulvérisation selon l'une des revendications 1 à 7, caractérisé en ce que l'alimentation en lubrifiant s'effectue sous pression, la pression d'alimentation en lubrifiant étant supérieure à la pression de sortie du mélange hors de la chambre de mélange (20).

9. Système de graissage par pulvérisation selon l'une des revendications 1 à 8, caractérisé en ce qu'à la conduite de graissage par pulvérisation (24) est reliée une pièce en T comportant un embout à effet de rotation (29) pour diviser le mélange lubrifiant-air.

10. Utilisation d'un système de graissage par pulvérisation selon l'une des revendications 1 à 9 comme installation de graissage de boudins de véhicules ferroviaires, constituée d'une pompe à piston magnétique (P, P1, P2) avec raccord direct d'air comprimé (1) et chambre de mélange intégrée (20) ainsi qu'au moins une conduite de graissage par pulvérisation (24) conduisant à une buse (26).

11. Utilisation selon la revendication 10, caractérisée par deux pompes à piston magnétique fonctionnant en parallèle (P1, P2) dont les chambres de mélange (20) sont reliées chacune par une pièce en T (34, 35) à des buses (26) dont deux sorties sont chacune dirigées en se croisant vers l'autre boudin.
